# EUROPÄISCHE PATENTSCHRIFT

(11) **EP 2 820 816 B1**
(45) Veröffentlichungstag und Bekanntmachung des Hinweises auf die Patenterteilung: **10.04.2019**
(21) Anmeldenummer: 13704004.4
(22) Anmeldetag: 08.02.2013
(51) Int. Cl.: H04W 12/06, H04L 29/06, G06F 21/62, H04B 7/185

(54) **AUTHENTIFIZIERUNGSVERFAHREN FÜR EINEN PASSAGIER UND KORRESPONDIERENDE SOFTWARE**
AUTHENTICATION METHOD FOR A PASSENGER AND CORRESPONDING SOFTWARE
PROCÉDÉ D'AUTHENTIFICATION POUR UN PASSAGER ET LOGICIEL CORRESPONDANT

(30) Priorität: 28.02.2012 DE 102012203032
(43) Veröffentlichungstag der Anmeldung: 07.01.2015
(73) Patentinhaber: Lufthansa Technik AG, 22335 Hamburg (DE)
(72) Erfinder: NISS, Frank, 22453 Hamburg (DE)
(74) Vertreter: Müller Verweyen
(86) Internationale Anmeldenummer: PCT/EP2013/000372
(87) Internationale Veröffentlichungsnummer: WO 2013/127488

(56) Entgegenhaltungen:
- EP-A1- 2 345 975
- WO-A1-2005/104489
- WO-A1-2009/097042
- US-A1- 2011 119 485

## Beschreibung

Die Erfindung betrifft ein Authentifizierungsverfahren für einen Passagier eines Flugzeugs sowie eine Software für ein Passagiergerät, die das Passagiergerät zur Durchführung des Empfangs von flugspezifischen, von einer Datenverarbeitungseinrichtung der Fluggesellschaft erzeugten Zugangsdaten über ein Kommunikationsnetz steuert, wobei die Zugangsdaten auf dem Passagiergerät einen Zugang zu dem Flugzeug ermöglichen.

Die WO 2009/097042 A1 offenbart ein System zur Bereitstellung individueller Dienstleistungen für einen Passagier in einem drahtlosen Funknetzwerk eines Flugzeugs. Es wird dabei ein Loginverfahren für den Passagier vorgeschlagen, bei dem der Passagier auf seinem drahtlosen Endgerät ein Loginfenster angezeigt bekommt, wenn er mit dem drahtlosen Funknetzwerk verbunden ist. Der Passagier kann dann seine Identifikationsdaten eingeben bzw. der Identifikationsprozess erfolgt automatisiert durch das drahtlose Endgerät des Passagiers.

Ferner zeigt die WO 2005/104489 A1 ein System und ein Verfahren, dass es Nutzern ermöglicht, sich für die Nutzung eines Servers zu autorisieren. Dafür wird ein sicherer Autorisierungslink generiert, wobei es möglich ist, durch Eingabe von Autorisierungsdaten über eine Benutzeroberfläche diese über den Autorisierungslink zu einem Autorisierungsserver zu senden.

Weiter wird in der EP 2 345 975 A1 ein Verifikationssystem offenbart, wobei ein Gerät für den Zugriff auf einen Server verifiziert wird. Es wird hierbei beispielsweise eine URL generiert, die anschließend mit einer Nachricht an das Gerät eines Nutzers gesendet wird. Der Inhalt, der mit der versendeten URL verlinkt ist, liegt auf einem sogenannten Content-Server und kann abgerufen werden, sofern durch den Content-Server verifiziert wurde, dass das Gerät auch zur Abfrage des Inhalts berechtigt ist.

Weiter zeigt die US 2011/0119485 A1 ein Verfahren, um mit einem Gerät in einer lokalen Umgebung zu kommunizieren, wobei ein mobiles Endgerät ein erstes digitales Zertifikat von einer vertrauenswürdigen Quelle empfängt, wobei ein zweites digitales Zertifikat von dem Gerät in der lokalen Umgebung über eine drahtlose Verbindung empfangen wird, wobei die Authentifizierung anhand des ersten und des zweiten digitalen Zertifikats erfolgt.

Passagiere von Flugzeugen können heutzutage ein Flugticket auf beispielsweise elektronischem Wege erwerben. Die Zustellung des Flugtickets in Form einer Bordkarte mit den entsprechenden Zugangsdaten wird häufig ebenfalls auf elektronischem Weg zugestellt. Für einen Zugang des Passagiers zum Flughafen und zum Flugzeug werden diese elektronisch zugestellten Zugangsdaten entweder auf Papier ausgedruckt oder in elektronischer Form auf einem tragbaren Passagiergerät genutzt und an entsprechender Stelle wiedergegeben bzw. übertragen. Ein Passagiergerät kann ein Mobiltelefon oder ein tragbarer Computer sowie jegliche Mischform, wie Smartphones oder Tablet-PCs, sein, die dem jeweiligen Passagier gehören und von ihm mitgeführt werden.

Neben dem reinen Transport des Passagiers und dessen Gepäck bieten Fluggesellschaften dem Passagier verschiedene Dienstleistungen und Unterhaltungsmöglichkeiten während des Fluges an, wie z.B. Zugang zu weltweiten Datennetzen, wie beispielsweise Internet oder Telefonnetz, und Bordunterhaltungssysteme. Die Bordunterhaltungssysteme können teilweise mit einem Endgerät des Passagiers, einem Passagiergerät, genutzt werden.

Nachteilig ist die aufwendige Anbindung eines Passagiergerätes an das Bordunterhaltungssystem des Flugzeugs. Weiterhin ist eine personalisierte Nutzung des Bordunterhaltungssystems und einer externen Kommunikationseinrichtung mit dem Passagiergerät nicht möglich.

Die Aufgabe der Erfindung ist es, ein effizientes und einfach nutzbares Authentifizierungsverfahren sowie eine korrespondierende Software für ein Passagiergerät eines Passagiers anzugeben.

Diese Aufgabe wird ausgehend von dem Anspruch 1 gelöst. Bei einem Authentifizierungsverfahren für einen Passagier eines Flugzeugs einer Fluggesellschaft generiert erfindungsgemäß eine Datenverarbeitungseinrichtung der Fluggesellschaft flugspezifische Authentifizierungsdaten für die Nutzung eines Bordkommunikationsgeräts. Weiterhin erfindungsgemäß werden die Authentifizierungsdaten mittels eines Kommunikationsnetzes an ein tragbares Passagiergerät des Passagiers übertragen, wobei die Authentifizierungsdaten die Authentifizierung des Passagiergeräts durch funkgebundene Übertragung der Authentifizierungsdaten an ein Bordkommunikationsgerät ermöglichen.

Eine erfindungsgemäße Generierung von Authentifizierungsdaten und Übertragung an ein Passagiergerät ist vorteilhaft, weil die notwendigen Authentifizierungsdaten für eine Nutzung eines Bordkommunikationssystems im Flugzeug auf diese Weise elektronisch im Passagiergerät vorliegen. Somit kann eine Authentifizierung des Passagiergeräts bei einer funkgebundenen Kommunikation mit einem Bordkommunikationsgerät des Bordkommunikationssystems automatisch erfolgen, wodurch für den Passagier in einfacher Weise eine Nutzung eines Bordkommunikationssystems über das Bordkommunikationsgerät möglich wird.

Die Authentifizierungsdaten umfassen vorzugsweise alle Daten, die notwendig sind, einen funkgebundenen Zugriff auf ein gesichertes Bordkommunikationssystem mit einem Passagiergerät herzustellen. Der Zugriff ist typischerweise auf den jeweiligen Passagier für den entsprechenden Flug begrenzt, so dass die Authentifizierungsdaten flugspezifisch sind. Alternativ ist eine zeitliche Begrenzung des Zugriffs nach geplantem Flugbeginn oder erster Nutzung möglich. Die Authentifizierungsdaten erlauben einen Nachweis, dass der Passagier über eine entsprechende Zugriffsberechtigung allgemein oder für einen einzelnen Flug verfügt.

Flugspezifisch bedeutet in diesem Zusammenhang, dass elektronische Authentifizierungsdaten und/oder Zugangsdaten für den physischen Zugang für einen bestimmten Flug eines Flugzeugs vorgesehen sind. Ein Flug bezieht sich hierbei auf den Transportvorgang von Personen von einem Flughafen zu einem anderen Flughafen. Flugspezifische Authentifizierungsdaten oder Zugangsdaten beziehen sich auf diesen Transportvorgang sowie die dazugehörigen Einsteige- und Aussteigevorgänge. Flugspezifische Authentifizierungsdaten oder Zugangsdaten verlieren nach Abschluss des Fluges bzw. des Transportvorgangs ihre Gültigkeit, so dass die Authentifizierung und/oder der Zugang elektronisch mittels eines Passagiergeräts oder körperlich für Personen nach einem Flug mit dem Aussteigen der Passagiere ungültig wird.

Erfindungsgemäß generiert eine Datenverarbeitungseinrichtung der Fluggesellschaft flugspezifische Zugangsdaten für einen Passagier, wobei die Zugangsdaten mittels eines Kommunikationsnetzes an ein tragbares Passagiergerät des Passagiers übertragen werden. Die Zugangsdaten auf dem Passagiergerät ermöglichen einen Zugang zu dem Flugzeug. In Kombination mit einem Ausweisdokument erlauben die Zugangsdaten eine Personenkontrolle und eine entsprechende Zutrittsberechtigung zum Flugzeug und/oder zum Flughafen.

Die Zugangsdaten umfassen in der Regel die Flugnummer, den Passagiernamen, Abflugs- und Ankunftsort, Startzeit, Sitzbezeichnung und/oder die Flugbetreiber.

Die Authentifizierungsdaten werden erfindungsgemäß gemeinsam mit den Zugangsdaten in einer einheitlichen Nachricht an das Passagiergerät übertragen. Eine einheitliche Nachricht kann beispielsweise eine E-Mail, eine MMS oder ein beliebiges Nachrichtenformat sein, das geeignet ist, die Zugangsdaten und die Authentifizierungsdaten gemeinsam zu übermitteln. Einheitlich bezeichnet hierbei eine gemeinsame Übermittlung der Daten, so dass beispielsweise die übermittelten Zugangsdaten, die im Allgemeinen eine elektronische Bordkarte bilden mit weiteren Authentifizierungsdaten kombiniert ist, wodurch mit der elektronischen Bordkarte neben dem Zugang zum Flugzeug auch der funkgebundene Zugriff auf ein Bordkommunikationssystem im Flugzeug ermöglicht werden kann.

Eine gemeinsame Übertragung der Zugangsdaten mit den Authentifizierungsdaten ermöglicht dem Passagier durch die Zugangsdaten in einfacher Weise die Nutzung einer elektronischen Bordkarte mit seinem tragbaren Passagiergerät, so dass der örtliche Zugang des Passagiers zum Flugzeug mit dem Passagiergerät erreicht werden kann. Weiterhin kann der Passagier im Flugzeug mit dem gleichen Gerät und der gleichen Nachricht das Bordkommunikationssystem nutzen, so dass durch die Integration von Zugangsdaten und Authentifizierungsdaten eine einfache Nutzung möglich wird. Für die Anbindung des Passagiergeräts an das Bordkommunikationssystem ist dadurch gegebenenfalls nur die Einwilligung des Nutzers bzw. des Passagiers erforderlich.

In einer vorteilhaften Ausführungsform enthalten die generierten Authentifizierungsdaten Verschlüsselungsinformationen für die Kommunikation zwischen dem Passagiergerät und dem Bordkommunikationsgerät. Verschlüsselungsinformationen, die vorab an das Passagiergerät mit den Authentifizierungsdaten übermittelt wurden, sind für eine gesicherte Kommunikation zwischen einem Bordkommunikationsgerät und dem Passagiergerät vorteilhaft, weil Dritte, z.B. weitere Passagiere mit anderen Passagiergeräten, auf diese Weise keinen unberechtigten Zugriff auf den Datenaustausch erlangen können. Dies erhöht insgesamt die Datensicherheit für den Passagier.

In einer weiteren möglichen Ausführungsform werden die Authentifizierungsdaten in Form eines Links auf das Passagiergerät übertragen. Mit der Übertragung eines Links ist es in einfacher Weise möglich, jedem Passagiergerät zunächst nur eine rudimentäre Kommunikation mit dem Bordkommunikationsgerät zu ermöglichen, die die Anwahl des Links erlaubt, wodurch die weiterführende Kommunikation mit der Nutzung des Bordkommunikationssystems von verschiedenen Medieninhalten und/oder Datenverbindungen des Bordkommunikationssystems mit dem Passagiergerät ermöglicht wird.

Vorzugsweise werden die Zugangsdaten durch eine auf dem Passagiergerät installierte Software zur Verarbeitung und Nutzung verarbeitet und bereitgestellt. Eine auf dem Passagiergerät installierte Software ermöglicht in einfacher Weise die an das jeweilige Gerät angepasste Darstellung und Bereithaltung der Zugangsdaten für das Passieren einer Zugangskontrolle des Passagiers am Flugzeug.

Weiterhin vorzugsweise werden die Authentifizierungsdaten durch eine auf dem Passagiergerät installierte Software zur Verarbeitung und Nutzung verarbeitet und bereitgestellt. Die Authentifizierungsdaten können auf diese Weise eine an das Passagiergerät angepasste Authentifizierung bei einer funkgebundenen Kommunikation mit dem Bordkommunikationsgerät ermöglichen, wodurch mögliche manuelle Anpassungen des Passagiers vermieden werden. Weiterhin ist dem Passagier über die installierte Software ein einfacher und direkter Zugriff auf die Medieninhalte des Bordkommunikationssystems möglich, die weiterhin durch die installierte Software an die Voraussetzungen des Passagiergeräts angepasst dargestellt werden können.

Bei der Authentifizierung wird vorzugsweise die Hardware-Adresse des Passagiergeräts beim Bordkommunikationsgerät gespeichert und für die weitere Authentifizierung genutzt. Dadurch ist das Passagiergerät eindeutig beim Bordkommunikationsgerät bekannt, so dass die Hardware-Adresse bei einer weiteren Nutzung zur Authentifizierung genutzt werden kann, was die Kommunikation zwischen Passagiergerät und Bordkommunikationsgerät vereinfacht. Die Hardware-Adresse ist hierbei eine eindeutige Kennung des funkaktiven Elements, und auch als MAC-Adresse oder physikalische Adresse bekannt.

Weiterhin ermöglicht das Bordkommunikationsgerät vorzugsweise nach Abschluss des Authentifizierungsverfahrens dem Passagier mit dem Passagiergerät einen personalisierten Zugriff auf ein Bordunterhaltungssystem. Ein personalisierter Zugriff ist vorteilhaft, um beispielsweise den Passagier direkt mit seinem Namen und in einer ihm verständlichen Sprache bei einem Bordunterhaltungssystem begrüßen und adressieren zu können. Darüber hinaus ermöglicht ein personalisierter Zugriff den Passagieren angepasste verschiedene Medieninhalte anzubieten, so dass beispielsweise unterschiedliche Buchungs- und/oder Kaufoptionen und somit Zugriffsmöglichkeiten für die Medieninhalte verfügbar sind.

Die personalisierte Nutzung eines Bordkommunikationssystems und/oder eines Bordunterhaltungssystems ermöglicht es, die angebotenen Inhalte, wie z.B. Filme, Musik oder Datenverbindungen, für jeden Passagier einzeln als Zusatzpaket beim Erwerb des Flugtickets anzubieten und die entsprechende Nutzung, beispielsweise einer externen Datenverbindung volumenbezogen, abzurechnen. Weiterhin ist es möglich, das übertragbare Datenvolumen für jeden Passagier zu begrenzen, um eine Überlastung der externen Kommunikationseinrichtung des Flugzeugs zu vermeiden.

Eine Kombination der Authentifizierungsdaten mit den Zugangsdaten ermöglicht z.B. eine sitzplatzgebundene Authentifizierung, so dass die Funkanbindung an das Bordkommunikationsgerät entsprechend eingerichtet werden kann.

In einer bevorzugten Ausführungsform ermöglicht das Bordkommunikationsgerät nach der Authentifizierung dem Passagier mit dem Passagiergerät Zugriff auf mindestens eine externe Datenverbindung. Externe Datenverbindungen können unter anderem dem Passagier über sein eigenes Passagiergerät eine Anbindung an weltweite Datennetze im Flugzeug bieten. Das Flugzeug verfügt hierfür über eine externe Kommunikationseinrichtung, die typischerweise eine höhere Leistungsfähigkeit bezüglich der Reichweite aufweist als die Passagiergeräte. Beispielsweise kann eine externe Kommunikationseinrichtung eine satellitengestützte externe Datenverbindung aufbauen. Die externe Datenverbindung kann dem Passagier Zugriff auf weltweite Datennetze, wie z.B. das Internet ermöglichen.

In einer vorteilhaften Ausführungsform steuert der Passagier mit dem Passagiergerät mindestens ein Wiedergabegerät des Bordunterhaltungssystems, das mit dem Bordkommunikationsgerät verbunden ist. Das Wiedergabegerät ist vorzugsweise jeweils auf einen Sitz im Flugzeug bezogen, und dazu eingerichtet, Medieninhalte des Bordunterhaltungssystems wiederzugeben. Die Möglichkeit ein oder mehrere Wiedergabegeräte, die z.B. Ton und Bild wiedergeben können, mit dem eigenen Passagiergerät steuern zu können, erzeugt beim Passagier eine positive Bindung zum Flugzeug und zur Fluggesellschaft. Weiterhin ergibt das Passagiergerät einen Bedienkomfort, der über die bordeigenen Bedienmöglichkeiten hinausgehen kann. Zudem kann der Passagier mit seinem gewohnten Gerät arbeiten.

Die Aufgabe der Erfindung wird weiterhin durch eine Software für ein Passagiergerät gemäß dem Anspruch 10 gelöst, die das Passagiergerät zur Durchführung des Empfangs von flugspezifischen, von einer Datenverarbeitungseinrichtung der Fluggesellschaft erzeugten Zugangsdaten über ein Kommunikationsnetz in dem Passagiergerät steuert, wobei die Zugangsdaten auf dem Passagiergerät einen Zugang zu dem Flugzeug ermöglichen. Erfindungsgemäß sind die Schritte des Empfangens von zusätzlichen flugspezifischen, von der Datenverarbeitungseinrichtung erzeugten Authentifizierungsdaten über ein Kommunikationsnetz und des Authentifizierens des Passagiergeräts durch funkgebundene Übertragung der Authentifizierungsdaten an ein Bordkommunikationsgerät.

Die Software ermöglicht eine direkte Authentifizierung des Passagiers mit seinem Passagiergerät bei einer funkgebundenen Kommunikation mit dem Bordkommunikationsgerät, so dass das Authentifizierungsverfahren effizient und ohne weitere Tätigkeiten des Passagiers erfolgen kann. Die Software steuert hierfür das Passagiergerät, um die funkgebundene Authentifizierung am Bordkommunikationsgerät vorzunehmen. Weiterhin bietet die Software vorzugsweise personalisierten Zugriff auf das Bordunterhaltungssystem sowie auf eine externe Datenverbindung über das Bordunterhaltungs- bzw. Bordkommunikationssystem. Die externe Datenverbindung kann vorzugsweise auch von weiterer, unabhängiger Software genutzt werden. Weiterhin bietet die Software vorzugsweise verschiedene Steuerungsmöglichkeiten für bordgebundene Wiedergabegeräte über eine Steuerungsoberfläche.

Die Erfindung wird im Folgenden anhand bevorzugter Ausführungsformen unter Bezugnahme auf die beigefügten Figuren erläutert. Dabei zeigt:
- Fig. 1a-1c: ein Authentifizierungsverfahren eines Passagiers mit einem Smartphone; und
- Fig. 2a-2c: ein Authentifizierungsverfahren eines Passagiers mit einem Smartphone und einem Laptop.

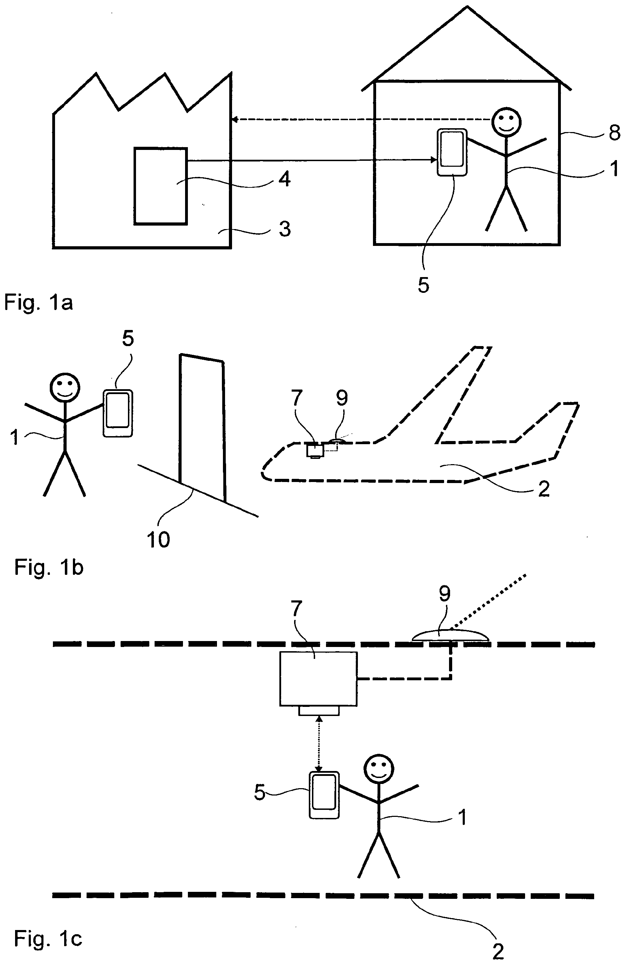

In Fig. 1 ist ein Ausführungsbeispiel eines Authentifizierungsverfahrens eines Passagiers 1 dargestellt, wobei in Fig. 1a ein Passagier 1 gezeigt ist, der sich vor einem Flug beispielsweise in seiner Wohnung 8 befindet. Dort ordert er bei einer Fluggesellschaft 3 ein Flugticket. Das Flugticket kann er auf verschiedene Weise bestellen, beispielsweise über ein Internetportal, telefonisch oder über eine Vermittlungsfirma.

Nach dem Kauf des Flugtickets für einen bestimmten Flug werden in einer Datenverarbeitungseinrichtung 4 der Fluggesellschaft 3 flugspezifische Authentifizierungsdaten für die Nutzung des Bordkommunikationssystems des Flugzeugs generiert.

Die flugspezifischen Authentifizierungsdaten werden über ein beliebiges Kommunikationsnetz an ein tragbares Passagiergerät 5 des Passagiers 1 übertragen.

In einem vorteilhaften Ausführungsbeispiel wird eine elektronische Bordkarte mit den Zugangsdaten für den Passagier 1 zusammen mit den Authentifizierungsdaten an das tragbare Passagiergerät 5 übertragen. Die Übertragung der Daten kann dabei mittels einer E-Mail, einer MMS oder einem anderen entsprechenden Datenformat erfolgen, so dass beide Datenarten in einer einheitlichen Nachricht durch die Datenverarbeitungseinrichtung 4 versendet werden.

In einem Ausführungsbeispiel verfügt der Passagier 1 auf seinem tragbaren Passagiergerät 6 über eine Software, über die er in einem vorteilhaften Ausführungsbeispiel als Nutzer registriert ist, so dass die Software die flugspezifischen, von einer Datenverarbeitungseinrichtung 4 der Fluggesellschaft 3 erzeugten Zugangsdaten und Authentifizierungsdaten empfängt.

In Fig. 1b befindet sich der Passagier 1 zeitlich kurz vor dem Abflug seines gebuchten Fluges am Flughafen. Er führt sein tragbares Passagiergerät 5 bei sich und verschafft sich mit einem Ausweisdokument und den auf dem tragbaren Passagiergerät 5 gespeicherten Zugangsdaten bei einer Personenschleuse 10 Zugang zum Abfertigungsbereich des Flughafens und zum Flugzeug 2. Die Zugangsdaten werden dabei in einem typischen Ausführungsbeispiel optisch in einem 2D-Barcode auf dem tragbaren Passagiergerät dargestellt und optisch durch einen Teil der Personenschleuse 10 ausgelesen. Alternativ können funkgestützte Nahfeldkommunikationssysteme (NFC) zur personenbezogenen Übertragung der Zugangsdaten vom tragbaren Passagiergerät 5 auf die Personenschleuse 10 angewendet werden.

Nachdem der Passagier 1 die Zugangskontrolle zum Flugzeug 2 passiert hat, begibt er sich im Flugzeug 2 auf seinen Sitzplatz. Das Flugzeug 2 verfügt in diesem Ausführungsbeispiel über ein Bordunterhaltungssystem, das in diesem Fall auch ein Bordkommunikationssystem ist. Hierfür weist das Flugzeug 2 ein Bordkommunikationsgerät 7 auf, so dass der Passagier 1 an Bord Zugang zu einem Medienserver erhalten kann. Die Verbindung zu den Passagiergeräten 5 erfolgt hierbei vor allem kabellos über einen Funkdatenzugangspunkt des Flugzeugs 2. Ein Medienserver stellt ein mediales Unterhaltungsangebot mit z.B. Filmen, Fernsehen, Musik mehreren Passagieren 1 zur Verfügung.

Das Flugzeug 2 befindet sich nach dem Einsteigen der Passagiere 1 üblicherweise direkt in der Start- bzw. Startvorbereitungsphase, in der der Betrieb von Passagiergeräten 5 und Bordunterhaltungssystemen aus sicherheitstechnischen Aspekten unterbunden wird.

In Fig. 1c befindet sich das Flugzeug 2 in keiner kritischen Flugphase mehr, und das Kabinenpersonal startet das Bordkommunikationsgerät 7 in der Kabine des Flugzeugs 2. Weiterhin aktiviert der Passagier 1 sein tragbares Passagiergerät 5, das, wie auch das Bordkommunikationsgerät 7, für eine funkgestützte Kommunikation eingerichtet ist.

Zwischen dem Passagiergerät 5 und dem Bordkommunikationsgeräts 7 wird eine rudimentäre Datenverbindung hergestellt, die die Authentifizierung erlaubt. Der Passagier 1 wählt auf seinem Passagiergerät 5 die entsprechende Nachricht mit den Authentifizierungsdaten aus, und startet beispielsweise über das Anklicken eines Links den eigentlichen Authentifizierungsvorgang, wobei sich das Passagiergerät 5 mit flugspezifischen und dem Passagier 1 zugeordneten Authentifizierungsdaten am Bordkommunikationsgerät 7 anmeldet und registriert.

In einem vorteilhaften Ausführungsbeispiel wird nach der Authentifizierung des Passagiers 1 mit seinem Passagiergerät 5 dessen Hardware-Adresse zur weiteren Nutzung während des Fluges im Bordkommunikationsgerät 7 oder -system für eine weitere Authentifizierung gespeichert, so dass beispielsweise bei einer zwischenzeitlichen Abschaltung des Passagiergerätes 5 und/oder des Bordkommunikationsgerätes 7 eine erneute vom Passagier 1 unterstützte Authentifizierung des Passagiergeräts 5 nicht mehr notwendig ist.

Nach der Authentifizierung erhält der Passagier 1 über sein Passagiergerät 5 Zugang zu den über das Bordkommunikationsgerät 7 angebotenen Medieninhalten, wie z.B. Filmen oder Musik, die der Passagier 1 auf seinem Passagiergerät 5 anschauen und/oder anhören kann. Der Zugang kann hierbei personalisiert erfolgen, so dass personenbezogen bestimmte Medieninhalte vorausgewählt oder zusammengestellt sein können. Weiterhin können entsprechend den Authentifizierungsdaten entsprechende Sprachen voreingestellt werden, so dass der Passagier 1 die Sprache nicht erst über ein Menü einstellen muss.

Weiterhin kann der Passagier 1 in einem vorteilhaften Ausführungsbeispiel nach einer Authentifizierung eine externe Kommunikationseinrichtung 9 des Flugzeugs 2 nutzen, und so beispielsweise das Internet im Flug mit seinem tragbaren Passagiergerät 5 nutzen. Durch die erfolgte Authentifizierung ist eine Zuordnung der genutzten Datenmenge zum Passagier 1 möglich, wodurch die Kontingentierung der für einen Passagier 1 abrufbaren Datenmenge oder eine passagierbezogene Abrechnung der Datenmenge möglich wird. Zudem könnte der Passagier 1 im Vorhinein bei der Buchung verschiedene Datenvolumen mitbuchen.

In einem vorteilhaften Ausführungsbeispiel ist auf dem Passagiergerät 5 eine Software installiert, die dem Passagier 1 vor dem Flug zur Verfügung gestellt wurde. Die Software hat vorteilhafterweise die entsprechenden Zugangs- und Authentifizierungsdaten empfangen und gespeichert. Startet der Passagier 1 im Flugzeug 2 diese Software, erkennt die Software in einem möglichen Ausführungsbeispiel das Bordkommunikationsgerät 7 über einen Funkdatenzugangspunkt als drahtloses Netzwerk und nutzt die vorhandenen Authentifizierungsdaten, um das Passagiergerät 5 am Bordkommunikationsgerät 7 zu authentifizieren. Der Passagier 1 erhält anschließend Zugang zum Medienangebot, das auf dem Bordkommunikationsgerät 7 oder einem angeschlossenen Medienserver hinterlegt ist. Durch die Software auf dem Passagiergerät 1 kann dies direkt in der Software über ein Menü erfolgen. Darüber hinaus kann die Software in einem möglichen Ausführungsbeispiel direkt zum Abspielen der Medieninhalte genutzt werden. Zusätzlich können an den Sitzplatz gebundene Funktionen im Flugzeug 2 über die Software dargestellt werden, wie z.B. die Essensauswahl, eine Ruffunktion nach einem Servicemitarbeiter sowie die Steuerung von dem Sitzplatz zugeordneten Wiedergabegeräten des Flugzeugs 2. Hierfür ist eine kombinierte Übertragung der Zugangsdaten, die unter anderem den Sitzplatz beinhalten, und der Authentifizierungsdaten vorteilhaft.

Darüber hinaus kann die Software eine Verwaltung der Nutzung der externen Datenverbindung ermöglichen sowie anderen Softwareanwendungen auf dem tragbaren Passagiergerät 5 Zugang zum Internet über die externe Kommunikationseinrichtung 9 des Flugzeugs 2 ermöglichen.

In einem möglichen Ausführungsbeispiel enthalten die Authentifizierungsdaten zusätzliche Verschlüsselungsinformationen, die für eine gesicherte drahtlose Kommunikation zwischen dem Passagiergerät 5 und dem Bordkommunikationsgerät 7 genutzt werden können. Insbesondere mit der entsprechenden, von der Fluggesellschaft 3 zur Verfügung gestellten Software ist eine vorteilhafte Verschlüsselung der Datenverbindung möglich. Die Verschlüsselung dient unter anderem dazu, ein Abhören der übertragenen Daten, vor allem über die externe Kommunikationseinrichtung 9, durch andere mobile Geräte von Dritten im Flugzeug 2 zu verhindern.

Nach Ende des Fluges verlässt der Passagier 1 das Flugzeug 2 wieder, so dass in einem vorteilhaften Ausführungsbeispiel der Zugriff auf das Bordkommunikationssystem mit den Authentifizierungsdaten oder mit der Hardware-Adresse anschließend nicht mehr möglich ist, und nur mittels einer erneuten Authentifizierung mit für einen nächsten Flug gültigen Authentifizierungsdaten erfolgen kann. Die Hardware-Adresse kann anschließend wieder gelöscht werden und die entsprechenden Datenprotokolle ggf. für eine Abrechnung der Nutzung an eine Datenverarbeitungseinrichtung der Fluggesellschaft 3 übertragen werden.

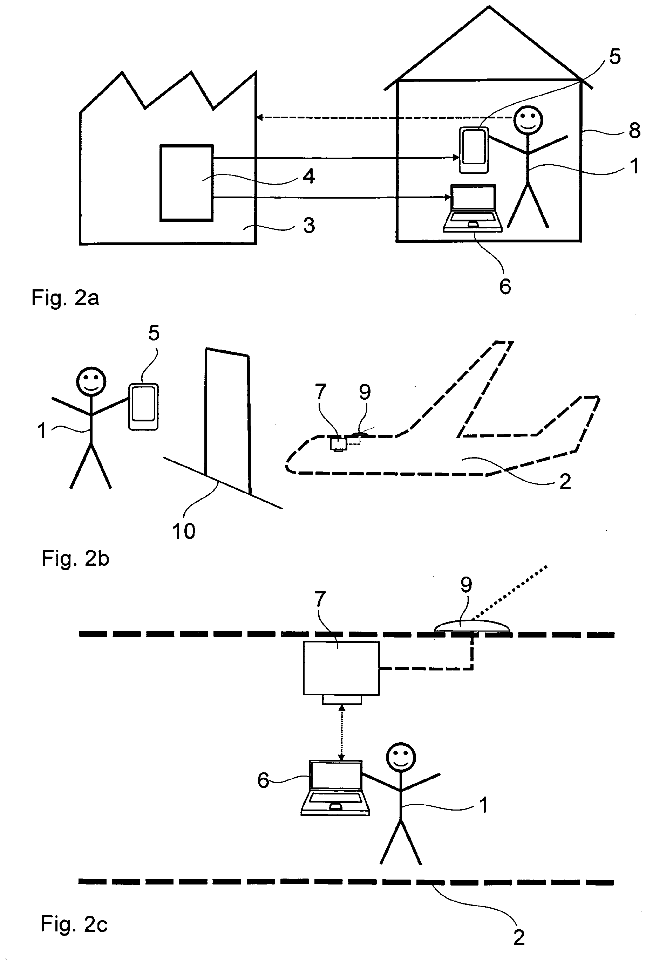

In Fig. 2 ist ein ähnliches Authentifizierungsverfahren wie in Fig. 1 dargestellt. Der Passagier 1 führt in diesem Ausführungsbeispiel jedoch zwei tragbare Passagiergeräte 5,6 mit sich. Dies sind, wie in Fig. 2a erkennbar, ein Smartphone 5 und ein Laptop 6, was heutzutage eine häufige Gerätekombination bei Fluggästen ist. In diesem Ausführungsbeispiel kauft der Passagier neben dem Flugticket ein bestimmtes Bordunterhaltungsprogrammpaket sowie ein Datentransfervolumen von beispielsweise 100 MB. Der Kauf des Flugtickets und der Zusatzoptionen kann hierbei beispielsweise auch über die entsprechende Software, die zur Authentifizierung genutzt wird, vorgenommen werden. Nach dem Kauf des Flugtickets erfolgt ein Versenden der Authentifizierungsdaten durch die Datenverarbeitungseinrichtung der Fluggesellschaft 3 sowie folglich eine Übertragung der Authentifizierungsdaten auf das Smartphone 5 und/oder den Laptop 6. Zudem erfolgt eine Übertragung der Zugangsdaten auf das Smartphone 5 und/oder den Laptop 6. In einem vorteilhaften Ausführungsbeispiel können Zugangs- und Authentifizierungsdaten in einer einheitlichen Nachricht an beide tragbaren Passagiergeräte 5,6 übertragen werden.

Darüber hinaus werden die Authentifizierungsdaten an das Bordkommunikationssystem mit dem Bordkommunikationsgerät 7 des Flugzeugs 2 übertragen, so dass diese vor dem Flugbeginn für eine spätere Authentifizierung vorliegen.

In Fig. 2b nutzt der Passagier 1 die auf dem Smartphone 5 als Passagiergerät 5 für den Flug gespeicherten Zugangsdaten, die allgemein auch als elektronische Bordkarte bezeichnet werden, um sich als Passagier 1 für den entsprechenden Flug zu identifizieren. Alternativ kann ein Ausdruck auf Papier genutzt werden, um die entsprechenden Zugangsdaten für das Passieren der Personenschleuse 10 am Flughafen bereitzuhalten. Weiterhin kann die genutzte Software zur Darstellung der Zugangsdaten genutzt werden.

Im Unterschied zu dem Ausführungsbeispiel in Fig. 1 nutzt der Passagier 1 jedoch im Flugzeug 2 seinen Laptop 6 als Passagiergerät 6, um einen Zugriff auf den Medienserver des Bordunterhaltungssystems über das Bordkommunikationsgerät 7 zu erhalten. Der Laptop 6 wird typischerweise aufgrund seiner Bauform nicht genutzt, um die Zugangsdaten bzw. die elektronische Bordkarte in geeigneter Art an die Personenschleuse 10 zu übermitteln, weist jedoch bei der Darstellung von Medieninhalten und der effektiven Nutzung einer externen Datenverbindung Vorteile gegenüber dem kleineren Smartphone 5 auf.

In Fig. 2c authentifiziert sich der Passagier 1 mit seinem Laptop 6 mit den erhaltenen Authentifizierungsdaten über den Funkdatenzugangspunkt am Bordkommunikationsgerät 7, so dass eine personen- und/oder sitzplatzbezogene Nutzung des Bordkommunikationssystems des Medienservers ermöglicht wird. Weiterhin kann er nach der Authentifizierung das Bordunterhaltungssystem im vollen Umfang nutzen sowie in diesem Ausführungsbeispiel sein zusätzlich gebuchtes Datentransfervolumen ausnutzen.

In möglichen vorteilhaften Ausführungsbeispielen sind insbesondere die Authentifizierungsdaten nach einer Übertragung an ein Passagiergerät 5, 6 änderbar. Dies ist vorteilhaft, um Ergänzungen oder Änderungen eines Angebots, wie z.B. dem Zugang zu Medieninhalten von einem Bordkommunikationsgerät 7, kurzfristig vor einem Flug oder direkt vor Ort anpassen zu können. Hierfür werden die Authentifizierungsdaten vorzugsweise mit zusätzlichen elektronischen Passwörtern ergänzt.

Eine derartige Änderung oder Ergänzung kann in einem möglichen Ausführungsbeispiel auch unabhängig von einer Datenverbindung zu der Datenverarbeitungseinrichtung 4 einer Fluggesellschaft 3 erfolgen. Dies kann beispielsweise durch ein lokales Vorhalten von entsprechenden Daten auf einem Computer am Flughafen, z.B. im Bereich des Fluggaststeigs, ermöglicht werden, so dass eine lokale Nachbuchung von Zusatzfunktionen oder kurzfristige Umbuchungen bspw. auf einen anderen Flug ermöglicht werden. Mit Hilfe einer lokalen Vorhaltung der entsprechenden Daten können derartige Änderungen unabhängig von einer jederzeit verfügbaren Datenverbindung zu der Datenverarbeitungseinrichtung 4 erfolgen.

In weiteren möglichen Ausführungsbeispielen können in einem Passagiergerät 5, 6 Daten gespeichert werden, welche neben den eigentlichen Zugangsdaten und Authentifizierungsdaten für einen Flug Zusatzdaten enthalten, die dauerhaft, d.h. für mehrere Flüge, gültig sein können. Solche Zusatzdaten können bspw. die bevorzugten Bestellungen für Essen und Trinken, die bevorzugte Sprache oder weitere passagierbezogene Profildaten in einem Flugzeug 2 umfassen.

## Patentansprüche

1. Authentifizierungsverfahren für einen Passagier (1) eines Flugzeugs (2) einer Fluggesellschaft (3), wobei
- eine Datenverarbeitungseinrichtung (4) der Fluggesellschaft (3) flugspezifische Authentifizierungsdaten für eine Nutzung eines Bordkommunikationsgeräts (7) generiert, wobei
- die Authentifizierungsdaten die Authentifizierung des Passagiergeräts (5,6) durch funkgebundene Übertragung der Authentifizierungsdaten an das Bordkommunikationsgerät (7) ermöglichen, wobei
- die Datenverarbeitungseinrichtung (4) der Fluggesellschaft (3) flugspezifische Zugangsdaten für den Passagier (1) generiert, wobei
- die Zugangsdaten mittels eines Kommunikationsnetzes an das tragbare Passagiergerät (5,6) des Passagiers (1) übertragen werden, und
- die Zugangsdaten auf dem Passagiergerät (5,6) einen Zugang zu dem Flugzeug (2) ermöglichen, wobei
- die Authentifizierungsdaten mittels eines Kommunikationsnetzes an ein tragbares Passagiergerät (5,6) des Passagiers (1) übertragen werden, wobei
- die Authentifizierungsdaten gemeinsam mit den Zugangsdaten in einer einheitlichen Nachricht an das Passagiergerät (5,6) übertragen werden.

2. Authentifizierungsverfahren nach Anspruch 1, **dadurch gekennzeichnet, dass** die generierten Authentifizierungsdaten Verschlüsselungsinformationen für die Kommunikation zwischen dem Passagiergerät (5,6) und dem Bordkommunikationsgerät (7) enthalten.

3. Authentifizierungsverfahren nach einem der vorangehenden Ansprüche, **dadurch gekennzeichnet, dass** die Authentifizierungsdaten in Form eines Links auf das Passagiergerät (5,6) übertragen werden.

4. Authentifizierungsverfahren nach einem der vorangehenden Ansprüche, **dadurch gekennzeichnet, dass** die Zugangsdaten durch eine auf dem Passagiergerät (5,6) installierte Software zur Verarbeitung und Nutzung verarbeitet und bereitgestellt werden.

5. Authentifizierungsverfahren nach einem der vorangehenden Ansprüche, **dadurch gekennzeichnet, dass** die Authentifizierungsdaten durch eine auf dem Passagiergerät (5,6) installierte Software zur Verarbeitung und Nutzung verarbeitet und bereitgestellt werden.

6. Authentifizierungsverfahren nach einem der vorangehenden Ansprüche, **dadurch gekennzeichnet, dass** bei der Authentifizierung die Hardware-Adresse des Passagiergeräts (5,6) beim Bordkommunikationsgerät (7) gespeichert und für die weitere Authentifizierung genutzt wird.

7. Authentifizierungsverfahren nach einem der vorangehenden Ansprüche, **dadurch gekennzeichnet, dass** das Bordkommunikationsgerät (7) nach der Authentifizierung dem Passagier (1) mit dem Passagiergerät (5,6) einen personalisierten Zugriff auf ein Bordunterhaltungssystem ermöglicht.

8. Authentifizierungsverfahren nach einem der vorangehenden Ansprüche, **dadurch gekennzeichnet, dass** das Bordkommunikationsgerät (7) nach der Authentifizierung dem Passagier (1) mit dem Passagiergerät (5,6) Zugriff auf mindestens eine externe Datenverbindung ermöglicht.

9. Authentifizierungsverfahren nach einem der vorangehenden Ansprüche, **dadurch gekennzeichnet, dass** der Passagier (1) mit dem Passagiergerät (5,6) mindestens ein Wiedergabegerät des Bordunterhaltungssystems, das mit dem Bordkommunikationsgerät (7) verbunden ist, steuert.

10. Software für ein Passagiergerät (5,6) eines Passagiers (1) eines Flugzeugs (2) einer Fluggesellschaft (3), wenn sie auf dem Passagiergerät ausgeführt wird das Passagiergerät (5,6) zur Durchführung folgender Schritte in dem Passagiergerät (5,6) steuert:
- Empfangen von flugspezifischen, von einer Datenverarbeitungseinrichtung (4) der Fluggesellschaft (3) erzeugten Zugangsdaten über ein Kommunikationsnetz, wobei
- die Zugangsdaten auf dem Passagiergerät (5,6) einen Zugang zu dem Flugzeug (2) ermöglichen, und
- Authentifizieren des Passagiergeräts (5,6) durch funkgebundene Übertragung von zusätzlichen flugspezifischen, von der Datenverarbeitungseinrichtung (4) erzeugten Authentifizierungsdaten an ein Bordkommunikationsgerät (7), wobei
- Empfangen der Authentifizierungsdaten für eine Nutzung eines Bordkommunikationsgeräts (7) über ein Kommunikationsnetz, und
die Authentifizierungsdaten gemeinsam mit den Zugangsdaten in einer einheitlichen Nachricht an das Passagiergerät übertragen werden.

## Claims

1. Authentication method for a passenger (1) of an aircraft (2) of an airline (3), wherein
- a data processing apparatus (4) of the airline (3) generates flight-specific authentication data for use of an on-board communication device (7), wherein
- the authentication data allow the authentication of the passenger device (5, 6) by wirelessly transmitting the authentication data to the on-board communication device (7), wherein
- the data processing apparatus (4) of the airline (3) generates flight-specific access data for the passenger (1), wherein
- the access data are transmitted to the portable passenger device (5, 6) of the passenger (1) by means of a communication network, and
- the access data on the passenger device (5, 6) allow access to the aircraft (2), wherein
- the authentication data are transmitted to a portable passenger device (5, 6) of the passenger (1) by means of a communication network, wherein
- the authentication data are transmitted together with the access data to the passenger device (5, 6) in a single message.

2. Authentication method according to claim 1, **characterised in that** the generated authentication data contain encryption information for the communication between the passenger device (5, 6) and the on-board communication device (7).

3. Authentication method according to any of the preceding claims, **characterised in that** the authentication data are transmitted to the passenger device (5, 6) in the form of a link.

4. Authentication method according to any of the preceding claims, **characterised in that** the access data are processed and provided by software installed on the passenger device (5, 6) for processing and use.

5. Authentication method according to any of the preceding claims, **characterised in that** the authentication data are processed and provided by software installed on the passenger device (5, 6) for processing and use.

6. Authentication method according to any of the preceding claims, **characterised in that** during authentication, the hardware address of the passenger device (5, 6) is stored in the on-board communication device (7) and is used for further authentication.

7. Authentication method according to any of the preceding claims, **characterised in that** after authentication, the on-board communication device (7) allows the passenger (1) personalised access to an in-flight entertainment system using the passenger device (5, 6).

8. Authentication method according to any of the preceding claims, **characterised in that** after authentication, the on-board communication device (7) allows the passenger (1) access to at least one external data connection using the passenger device (5, 6).

9. Authentication method according to any of the preceding claims, **characterised in that** the passenger (1) controls at least one playback device of the in-flight entertainment system, which is connected to the on-board communication device (7), using the passenger device (5, 6).

10. Software for a passenger device (5, 6) of a passenger (1) of an aircraft (2) of an airline (3), which software, when operated on the passenger device, controls the passenger device (5, 6) in order to carry out the following steps in the passenger device (5, 6):
- reception of flight-specific access data, generated by a data processing apparatus (4) of the airline (3), via a communication network, wherein
- the access data on the passenger device (5, 6) allow access to the aircraft (2), and
- authentication of the passenger device (5, 6) by wirelessly transmitting additional flight-specific authentication data, generated by the data processing apparatus (4), to an on-board communication device (7), wherein
- reception of the authentication data for use of an on-board communication device (7) via a communication network, and
- the authentication data are transmitted together with the access data to the passenger device in a single message.

## Revendications

1. Procédé d'authentification pour un passager (1) d'un avion (2) d'une compagnie aérienne (3), dans lequel
- un équipement de traitement de données (4) de la compagnie aérienne (3) génère des données d'authentification spécifiques à un vol pour une utilisation d'un appareil de communication de bord (7), dans lequel
- les données d'authentification permettent l'authentification de l'appareil du passager (5, 6) par transmission radio des données d'authentification à l'appareil de communication de bord (7), dans lequel
- l'équipement de traitement de données (4) de la compagnie aérienne (3) génère des données d'accès spécifiques à un vol pour le passager (1), dans lequel
- les données d'accès étant transmises au moyen d'un réseau de communication à l'appareil du passager (5, 6) portable du passager (1), et dans lequel
- les données d'accès sur l'appareil du passager (5, 6) permettent un accès à l'avion (2), dans lequel
- les données d'authentification sont, au moyen d'un réseau de communication, transmises à un appareil du passager (5, 6) portable du passager (1), dans lequel
- les données d'authentification sont, conjointement avec les données d'accès, transmises à l'appareil du passager (5, 6) dans un message uniforme.

2. Procédé d'authentification selon la revendication 1, **caractérisé en ce que** les données d'authentification générées contiennent des informations de cryptage pour la communication entre l'appareil du passager (5, 6) et l'appareil de communication de bord (7).

3. Procédé d'authentification selon l'une des revendications précédentes, **caractérisé en ce que** les données d'authentification sont transmises sous forme d'un lien sur l'appareil du passager (5, 6).

4. Procédé d'authentification selon l'une des revendications précédentes, **caractérisé en ce que** les données d'accès sont traitées et fournies par un logiciel de traitement et d'utilisation installé sur l'appareil du passager (5, 6).

5. Procédé d'authentification selon l'une des revendications précédentes, **caractérisé en ce que** les données d'authentification sont traitées et fournies par un logiciel de traitement et d'utilisation installé sur l'appareil du passager (5, 6).

6. Procédé d'authentification selon l'une des revendications précédentes, **caractérisé en ce que**, lors de l'authentification, l'adresse matérielle de l'appareil du passager (5, 6) est enregistrée sur l'appareil de communication de bord (7) et utilisée pour l'authentification ultérieure.

7. Procédé d'authentification selon l'une des revendications précédentes, **caractérisé en ce que**, après l'authentification, l'appareil de communication de bord (7) permet au passager (1) détenant l'appareil du passager (5, 6) un accès personnalisé à un système de divertissement embarqué.

8. Procédé d'authentification selon l'une des revendications précédentes, **caractérisé en ce que**, après l'authentification, l'appareil de communication de bord (7) permet au passager (1) détenant l'appareil du passager (5, 6) un accès à au moins une liaison de données externe.

9. Procédé d'authentification selon l'une des revendications précédentes, **caractérisé en ce que** le passager (1) détenant l'appareil du passager (5, 6) commande au moins un appareil de lecture du système de divertissement embarqué qui est raccordé à l'appareil de communication de bord (7).

10. Logiciel pour un appareil du passager (5, 6) d'un passager (1) d'un avion (2) d'une compagnie aérienne (3), lequel, lorsqu'il est utilisé sur l'appareil du passager, commande l'appareil du passager (5, 6) pour l'exécution des étapes suivantes dans l'appareil du passager (5, 6) :
- réception, via un réseau de communication, de données d'accès spécifiques à un vol générées par un équipement de traitement de données (4) de la compagnie aérienne (3),
- les données d'accès sur l'appareil du passager (5, 6) permettant un accès à l'avion (2), et
- authentification de l'appareil du passager (5, 6) par une transmission par radio à un appareil de communication de bord (7) de données d'authentification supplémentaires spécifiques à un vol générées par l'équipement de traitement de données (4), dans lequel
- réception des données d'authentification pour une utilisation d'un appareil de communication de bord (7) par le biais d'un réseau de communication, et
- les données d'authentification sont, conjointement avec les données d'accès, transmises dans un message uniforme à l'appareil du passager.
